# EUROPÄISCHE PATENTSCHRIFT

(11) **EP 2 392 239 B1**
(45) Veröffentlichungstag und Bekanntmachung des Hinweises auf die Patenterteilung: **11.03.2015**
(21) Anmeldenummer: 11167814.0
(22) Anmeldetag: 27.05.2011
(51) Int. Cl.: A47J 31/00

(54) **Verfahren zur Konfiguration eines Kaffeevollautomaten**
Method for configuring an automatic coffee machine
Procédé de configuration d'une machine à café totalement automatique

(30) Priorität: 02.06.2010 DE 102010017221
(43) Veröffentlichungstag der Anmeldung: 07.12.2011
(73) Patentinhaber: Melitta Professional Coffee Solutions GmbH & Co., KG, 32429 Minden (DE)
(72) Erfinder: Buchholz, Bernd, Dr., 32369 Rahden (DE); Johanning-Meiners, Harald, 51149 Köln (DE); Martin-V'Ázquez, Eric, 32427 Minden (DE)
(74) Vertreter: Specht, Peter

(56) Entgegenhaltungen:
- WO-A2-01/12039
- DE-A1-102009 034 945

## Beschreibung

Die Erfindung betrifft ein Verfahren zur Konfiguration eines Kaffeevollautomaten nach dem Oberbegriff des Anspruchs 1.

Kaffeevollautomaten im gastronomischen Bereich bieten eine Reihe von Möglichkeiten von Maschineneinstellungen, die den Geschmack des ausgegebenen Kaffeegetränkes beeinflussen. Diese Maschineneinstellungen werden derzeit im Werk oder von einem Servicetechniker auf die Gegebenheiten vor Ort bei Inbetriebnahme des Gerätes oder bei Wartungsarbeiten fest eingestellt. Eine Nacheinstellung von Maschinenparametem durch den Gastronom oder einen anderen Endanwender ist in der Regel nicht möglich. Somit hängt der Geschmack der ausgegebenen Getränke in erster Linie vom individuellen Geschmacksempfinden des Servicetechnikers ab, der häufig die Einstellung der Maschine nicht systematisch sondern nach seiner individuellen früheren Erfahrung vornimmt.

Parallel dazu sind dem Servicetechniker oder Endanwender einige Möglichkeiten der Einstellung gegeben. Dies betrifft aber lediglich z.B. eine Änderung der Einwaage und nur selten eine Änderung der Brühtemperatur, sowie ggf. eine Änderung des Mahlgrades. Eine direkte Einstellung nach geschmacklichen Gesichtspunkten erfolgt dabei nicht.

Andere weitergehende Maschinenparameter wie z.B. der Anpressdruck oder dgl. können vom Anwender dagegen nicht beeinflusst werden.

Die WO 01/12039 A2 offenbart eine Steuerung einer Maschine zur Herstellung von Filterkaffee. Bei dieser Maschine wird die Kaffeemehl und die Wassermenge variiert.

Die DE 10 2009 034 945 A1 offenbart eine Herstellung von Espresso und amerikanischem Kaffee durch einen Kaffeevollautomaten, welcher in der Lage ist die Kaffeemehlmenge und die Wasserzufuhr zu variieren.

Die EP 2 279 683 A1 offenbart in erster Linie einen Kaffeehalbautomaten. Als Ansteuerparameter wird in diesem Dokument vorgeschlagen den Druck, die Temperatur und den Mahlgrad zu nutzen.

Es ist daher Aufgabe der vorliegenden Erfindung, ein Verfahren zur Konfiguration eines Kaffeevollautomaten bereitzustellen, die es ermöglichen, eine benutzerfreundliche Einstellung des Geschmacks eines Kaffeegetränkes zu ermöglichen.

Die Erfindung löst diese Aufgabe durch ein Verfahren mit den Merkmalen des Anspruchs 1.

Geschaffen wird ein Verfahren zur Konfiguration eines wenigstens eine oder mehrere Baugruppen aufweisenden Kaffeevollautomaten, mit folgenden Schritten:
- Eingeben eines oder mehrerer Geschmacksparameter (x₁-xₙ) eines Kaffeegetränkes an einer Eingabeeinheit (1), wobei die einen oder mehreren auswählbaren Geschmacksparameter (x₁-xₙ) wenigstens einen oder mehrere der folgenden Parameter betreffen: Säure, Bitterkeit, Salzigkeit, Fülle und/oder Abgang des Kaffeegetränkes; und
- Auswerten der Eingabe durch eine Steuereinheit (2) anhand eines Vergleichs der eingegebenen Geschmacksparameter mit zumindest einem vorgespeicherten Datensatz, der zumindest einen Ansteuerparameter zur Ansteuerung der Baugruppen (3.1-3.m) des Kaffeevollautomaten in Abhängigkeit von den eingegebenen Geschmacksparametern umfasst,
- Ansteuern der zumindest einen oder mehreren Baugruppen (3.1-3.m) des Kaffeevollautomaten durch die Steuereinheit mit dem bei dem Auswerten bestimmten Ansteuerparameter.

Die Ansteuerparameter umfassen zumindest den Anpressdruck des Kaffeemehls sowie einen oder mehrere der folgenden weiteren Parameter: den Mahlgrad des Kaffeemehls, die Brühtemperatur, die Menge der Einwaage an Kaffeemehl, der Menge und Dauer der Wasserzufuhr über einen Bypass und einen Umfang und eine Dauer einer Preinfusion.

Die Geschmacksparameter können auch weitere Parameter umfassen als die vorstehend aufgezählten.

Vorteilhafte Ausgestaltungen der Erfindung sind Gegenstand der Unteransprüche.

Durch das gezielte Auswerten einer Datenbankinformation und von diesem Auswerten abhängiges Ansteuern einer oder mehrerer Baugruppen des Kaffeevollautomaten werden Maschinenparameter, die bisher nur herstellerseitig fest voreingestellt wurden, für eine Geschmackskonfiguration bei der Herstellung eines Kaffeegetränkes nutzbar.

Dem Anwender oder anderen Personen, insbesondere auch einem Servicetechniker, wird es damit erstmals möglich, in einfacher Weise eine gezielte weitergehende Einstellung des Kaffeevollautomaten nach geschmacklichen Gesichtspunkten vorzunehmen.

So braucht beispielsweise weder ein einstellender Techniker noch ein sonstige Bediener wie ein Gastronom bei der Einstellung der Geschmacksparameter über Spezialwissen zum komplexen Geräteaufbau des Kaffeevollautomaten zu verfügen.

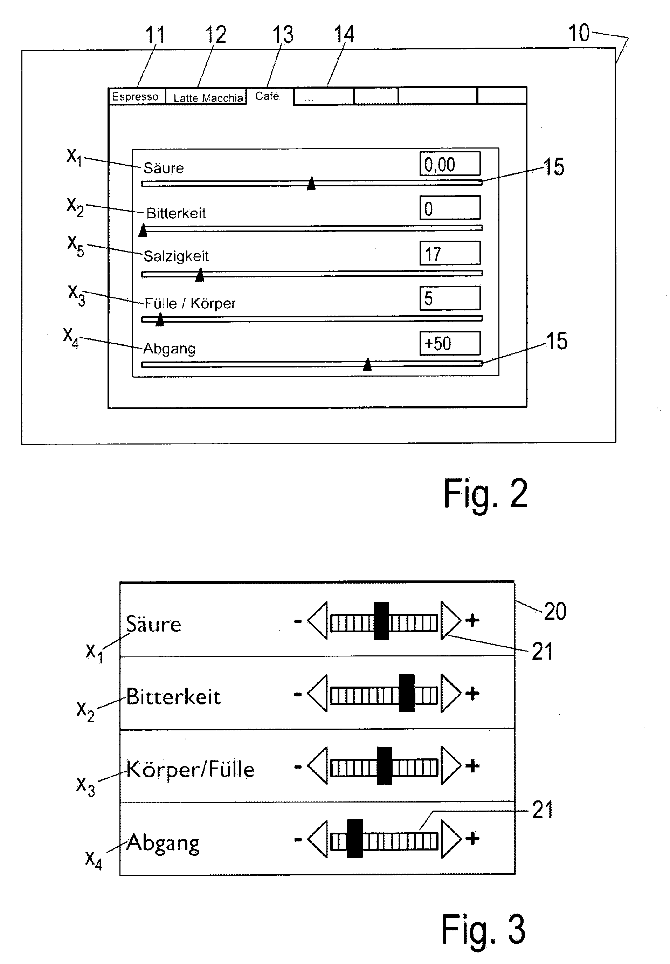

Dabei ist es von Vorteil, dass die auswählbaren Geschmacksparameter eine Einstellung von einem oder mehreren der folgenden Parameter umfassen: Säure, Bitterkeit, (wenn gewünscht) Salzigkeit (siehe Fig. 2), Fülle und/oder Abgang des Kaffeegetränkes. Diese Geschmacksparameter sind anerkannt und besonders bedeutsam, so dass der Verbraucher eine spezielle geschmackliche Ausprägung mit diesen Geschmacksparametern verbindet. Dies erleichtert dem Verbraucher die Einstellung des Geschmacks des Kaffeegetränkes.

Die Einstellung des oder der Geschmacksparameter kann vorteilhaft für die jeweilige Art eines Kaffeegetränkes wie beispielsweise Cappuccino, Espresso, Latte Macchiato, Kaffee und/oder oder Mocca und/oder andere angepasst werden.

Die optimalen Einstellungen für verschiedene Geschmacksparametervorwahlen werden herstellerseitig systematisch ermittelt und in einer Datenbank direkt oder nach Art von Funktionen oder dgl. gespeichert.

Das Einstellen der Geschmacksparameter kann dem Nutzer vorteilhaft durch eine Skalierung erleichtert werden, welche in einem Eingabefenster angeordnet ist, so dass bei der Auswertung des Datensignals mit der entsprechenden Information zu den Geschmacksparametern ein Abgleich an die voreingestellten Datensätze durch die Steuereinheit erfolgen kann.

Es ist von Vorteil, wenn die Datensätze, welche das in der Steuereinheit eingehende Datensignal in Steuersignale umwandeln, je nach Maschinentyp, Wasserqualität und/oder nach der eingesetzten Kaffeesorte voreingestellt werden. So werden die Geschmacksparameter in Maschinenparameter umgewandelt, wobei, unabhängig von den zuvor genannten Kenndaten ein gewünschter Geschmack unter den eingestellten Geschmacksparametern erreicht wird.

Es ist weiterhin von Vorteil, wenn optional nach dem Auswählen des Kaffeegetränkes ein Auswählen eines Geschmackszusatzes erfolgt.

Erfindungsgemäß weist ein Kaffeevollautomat, zur Herstellung eines Kaffeegetränkes nach einem der vorhergehenden Ansprüche eine Eingabeeinheit, zum Einstellen der Art und der Geschmacksparameter des Kaffeegetränkes auf. Dadurch wird eine bedienfreundliche Möglichkeit geschaffen, einzelne Geschmacksparameter einzustellen, ohne dass es zu Fehleinstellungen kommt. Das Einstellen erfolgt vorzugsweise durch Rückgriff auf Datenbankparameter - z.B. im Automat gespeichert oder online abrufbar - wobei anhand dieser vorgespeicherten Datenbankparameter sodann eine oder mehrere der verschiedenen Baugruppen des Kaffeevollautomaten angesteuert werden.

Für eine leichte Ablesbarkeit und Bestimmung der eingestellten Parameter ist es von Vorteil. wenn die Eingabeeinheit eine optische Ausgabeeinheit in Form eines Displays, vorzugsweise in Form eines Touchscreens, aufweist.

Um die einzelnen Auswahloptionen übersichtlich und nachvollziehbar zu gestalten ist es von Vorteil, wenn das Display mehrere Eingabefenster aufweist und/oder in mehrere Anzeigesegmente unterteilt ist, so dass die einzelnen Auswahloptionen übersichtlich angeordnet sind, was dem Endverbraucher ein schnelles Bedienen des Kaffeevollautomaten möglich macht.

In der Folge wird ein erfindungsgemäßes Ausführungsbeispiel anhand von Zeichnungen näher erläutert. Sie zeigen:
- Fig.1: Blockdiagramm zur Darstellung des Eingabe- und Steuerungsprinzips,
- Fig.2: Einstellung eines Bildschirmfensters eines erfindungsgemäßen Kaffeevollautomaten und
- Fig.3: Einstellung eines weiteren Ausführungsbeispiels eines Bildschirmfensters

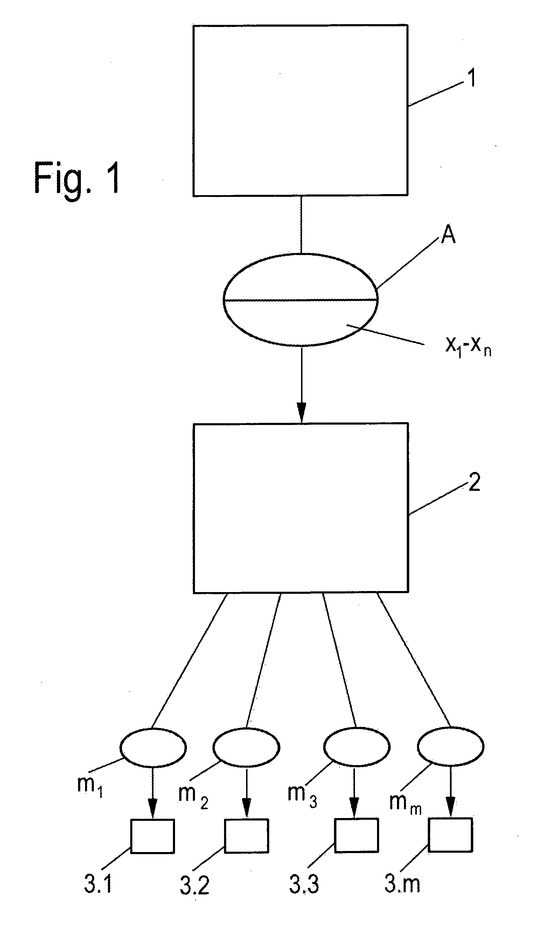

Fig.1 zeigt ein Blockdiagramm, in welchem schematisch ein mögliches Prinzip der Datenverarbeitung dargestellt ist.

Die Erfindung ist aber nicht auf das nachfolgend dargestellte Ausführungsbeispiel beschränkt. Insbesondere ermöglicht sie es erstmals, eine einfache individuelle Einstellung von Maschinenparametern vorzunehmen, um den Geschmack des koffeinhaltigen Getränkes weitergehend über eine bloße Vorauswahl eines Getränketyps hinaus zu beeinflussen. Dabei eignet sie sich sowohl für die Einstellung durch den Servicetechniker - was die Regel sein dürfte - als auch für eine Einstellung durch andere Bedienpersonen wie einen Gastronomen.

Nach einem möglichen Ablauf gibt die Bedienperson - beispielsweise der Gastronom - in eine Eingabeeinheit 1 zunächst gewünschte Informationen ein. Hierfür stehen ihm beispielsweise ein Bildschirm, in Form eines Touchscreens, sowie eine oder mehrere Eingabefunktionen zur Verfügung.

Zur besseren Übersichtlichkeit der Eingabe können unterschiedliche Bedienoberflächen als Bildschirmfenster gewählt werden.

Die Eingabe umfasst die Auswahl von unterschiedlichen Parametern. So kann die Eingabe beispielsweise in folgender Reihenfolge erfolgen:
Bei der dargestellten Verfahrensvariante erfolgt eine Auswahl des Kaffeegetränkes. Dies sind vorzugsweise eine Anzahl unterschiedlicher Kaffeespezialitäten, wie z.B. Cappuccino, Latte Macchiato, Kaffee schwarz, ggf. Milchmenge und/oder mit Milch, Wiener Melange, Mocca und dergleichen.

Diese Auswahl ist optional, nicht aber zwingend.

Wesentlich ist vielmehr, dass eine Auswahl von Geschmacksparametern x₁-xₙ des Kaffeegetränkes erfolgt, beispielsweise nach Säuregehalt, Bitterkeit, Salzigkeit, Fülle und Abgang. Diese Auswahl kann auch nur einmalig vorgenommen werden und dann nicht verändert werden, bis erneuter Bedarf entsteht, beispielsweise durch Unzufriedenheit mit dem Geschmack nach einem längeren Nutzen mit festen Parametern.

Der Säuregehalt des Kaffees, beispielsweise der Gehalt an Kaffeesäure, kann nach Röstverfahren und Anbaubedingungen der Kaffeebohnen variieren. Der Säuregehalt des Kaffees kann allerdings auch durch verschiedene Maschinenparameter beeinflusst werden.

Gleiches gilt für die Bitterkeit, beispielsweise hervorgerufen durch Chlorogensäure-Lactone und Phenyl-Indane, die im verstärkten Maße bei hohen Drücken und Temperaturen freigesetzt werden.

Sowohl die Salzigkeit als auch die Bitterkeit sind wesentliche Bestandteile des Kaffeearomas.

Die Fülle bzw. der Körper des Kaffees beschreibt die Beständigkeit des Kaffeegeschmacks im Mund und ist u.a. auf die Viskosität des Getränkes zurückzuführen. Die Fülle des Kaffees hängt beispielsweise vom Gehalt an Kaffeeöl und festen Substanzen in der Flüssigkeit ab.

Der Abgang ist der Nachgeschmack, welcher nach dem Schlucken des Kaffees empfunden wird.

Infolge der Auswahl der gewünschten Informationen an der Eingabeeinheit 1 erfolgt die Eingabe eines Datensignals A, das zumindest Informationen über die Art und der gewünschten Geschmacksparameter x₁-xₙ des Kaffeegetränks aufweist, in eine Steuereinheit 2. Die Auswahl erfolgt an einem Touchscreen mittels eines Fingers oder eines Stiftes und alternativ oder zusätzlich durch eine Maus, ein Mauspad oder einen anderen Befehlsgeber.

Dieses Signal A wird durch die Steuereinheit 2 ausgewertet. In Optimierung und Abstimmung mit vorhandenen Erfahrungswerten kann durch das Zusammenspiel der einzelnen Maschinenparameter m₁-mₘ der gewünschte Geschmacksparameter x₁-xₙ erreicht werden.

Zur Zuordnung einzelner Geschmacksparameter x₁-xₙ auf die jeweils festgesetzten Maschinenparameter m₁-mₘ sind beispielsweise Datensätzen hinterlegt, welche durch die Steuereinheit 2 des Kaffeevollautomaten in einer Datenbank verwaltet werden.

Die einen oder mehreren Maschinenparameter m₁-mₘ sind vorzugsweise Grö-βen, die durch Steuerung einzelner Bauteile 3.1-3 bzw. Baugruppen des Kaffeevollautomaten einstellbar sind.

Dies betrifft einen oder mehrere der folgenden Parameter umfassend den Anpressdruck des Kaffeemehls sowie den Mahlgrad des Kaffeemehls, die Brühtemperatur, die Menge der Einwaage an Kaffeemehl, die Menge und Dauer der Wasserzufuhr über einen Bypass, einen Umfang und eine Dauer einer Preinfusion und weitere Größen. Zur Einstellung dieser Größen sind entsprechende Baugruppen ansteuerbar, so z.B. eine Kesseleinheit zur Einstellung der Temperatur usw..

Beispielsweise kann einem geringen Wert für Bitterkeit ein geringer Anpressdruck des Kaffeemehls durch eine Andruckeinheit und eine geringe Brühtemperatur durch eine Brüheinheit zugeordnet werden. Im Fall der Brühtemperatur hätte dies beispielsweise eine Ansteuerung des Durchlauferhitzers oder des Wasserboilers zur Folge.

Eine Einstellung der Datensätze auf einen bestimmten Gerätetyp, auf die Wasserqualität und/oder die jeweils eingesetzte Kaffeesorte kann beispielsweise durch eine entsprechende Faktorisierung der Datensätze durch die Steuereinheit 2 berücksichtigt werden. Zudem kann die Einstellung der Datensätze je nach Kaffeespezialität variieren. So kann beispielsweise Mokka eine andere voreingestellte Skalierung für Bitterkeit aufweisen, als beispielsweise Cappuccino.

Fig. 2 zeigt ein Eingabefenster einer elektronischen Anzeige 10. Die optische Ausgabeeinheit 10 ist im vorliegenden Fall als Bildschirm-Display, vorzugsweise als Touchscreen, ausgebildet. Die Ausgabeeinheit 10 weist mehrere Eingabefenster 11-14 auf, mit Espresso 11, Latte Macchiato 12 und Café 13 und einem optionalen Eingabefenster 14 als Typen für eines Kaffeegetränkes. In dem optionalen Eingabefenster können Datensätze über ein weiteres Kaffeegetränk eingegeben werden, wodurch das Angebot des Kaffeevollautomaten auch auf andere Kaffeegetränke, wie z.B. Mokka ergänzt werden kann. Die Auswahl am Display kann durch einen Eingabestift erfolgen, der anders als eine breitflächige Fingereingabe eine punktuelle Eingabe ermöglicht.

Im Zentrum des Displays sind die einzelnen Geschmacksparameter x₁-x₅ mit Zahlenwerte angegeben und zur besseren Einschätzung der Werte zusätzlich mit einer balkenartigen Skalierung 15 auf, die Auskunft über die Tendenz des eingestellten Geschmacksparameters x₁-x₅ gibt.

Fig. 3 zeigt ein Display 20 mit mehreren Geschmacksparameter x₁-x₄, deren konkrete Werte anhand einer Intervallskala 21 ablesbar sind.

Zur Einstellung der Art des Kaffeegetränks, der Geschmackszusätze, der Geschmacksparameter und weiterer Einstelloptionen sind auf dem Display jeweils Wertebereiche oder Werteauswahlmöglichkeiten dargestellt, welche durch einen Befehlsgeber, beispielsweise eine Maus, eine Tastatur, ein Stellrad oder ein Mauspad oder dergleichen ein- bzw. verstellbar sind.

Alternativ oder zusätzlich kann die Eingabe durch einen Touchscreen oder ein Touchpad-segment erfolgen, so dass eine apparative Vereinfachung der Anlage erreicht wird.

### Bezugszeichen

- 1: Eingabeeinheit
- 2: Steuereinheit
- 3.1-3.m: Bauelement
- 10: optische Ausgabeeinheit
- 11-14: Eingabefenster
- 15: Skalierung
- 20: Display
- 21: Skalierung

- A: Datensignal
- x₁ - xₙ: Geschmacksparameter
- m₁ - mₘ: Maschinenparameter

## Patentansprüche

1. Verfahren zur Konfiguration eines wenigstens eine oder mehrere Baugruppen aufweisenden Kaffeevollautomaten, mit folgenden Schritten:
- Eingeben eines oder mehrerer Geschmacksparameter (x₁-xₙ) eines Kaffeegetränkes an einer Eingabeeinheit (1), wobei die einen oder mehreren auswählbaren Geschmacksparameter (x₁-xₙ) wenigstens einen oder mehrere der folgenden Parameter betreffen: Säure, Bitterkeit, Salzigkeit, Fülle und/oder Abgang des Kaffeegetränkes; und
- Auswerten der Eingabe durch eine Steuereinheit (2) anhand eines Vergleichs der eingegebenen Geschmacksparameter mit zumindest einem vorgespeicherten Datensatz, der zumindest einen Ansteuerparameter zur Ansteuerung der Baugruppen (3.1-3.m) des Kaffeevollautomaten in Abhängigkeit von den eingegebenen Geschmacksparametern umfasst,
- Ansteuern der zumindest einen oder mehreren Baugruppen (3.1-3.m) des Kaffeevollautomaten durch die Steuereinheit mit dem bei dem Auswerten bestimmten Ansteuerparameter,
**dadurch gekennzeichnet, dass**
die Ansteuerparameter zumindest den Anpressdruck des Kaffeemehls sowie einen oder mehrere der folgenden weiteren Parameter umfassen: den Mahlgrad des Kaffeemehls, die Brühtemperatur, die Menge der Einwaage an Kaffeemehl, der Menge und Dauer der Wasserzufuhr über einen Bypass, Umfang und Dauer einer Preinfusion.

2. Verfahren nach Anspruch 1, **gekennzeichnet durch** folgenden weiteren Schritt: Manuelles Auswählen eines Kaffeegetränkes an einer Eingabeeinheit (1) des Kaffeevollautomaten vor dem manuellen Auswählen von einem oder mehreren Geschmacksparametern.

3. Verfahren nach Anspruch 1 oder 2, **dadurch gekennzeichnet, dass** die einen oder mehreren auswählbaren Geschmacksparameter (x₁-Xₙ) wenigstens einen oder mehrere der folgenden Parameter umfassen: Säure, Bitterkeit, Salzigkeit, Fülle und/oder Abgang des Kaffeegetränkes.

4. Verfahren nach Anspruch 1, 2 oder 3, **dadurch gekennzeichnet, dass** das Kaffeegetränk eine oder mehrere der folgenden Kaffeegetränkarten umfasst: Cappuccino, Espresso, Latte Macchiato, Kaffee, Mocca und/oder andere.

5. Verfahren nach einem der vorhergehenden Ansprüche, **dadurch gekennzeichnet, dass** das manuelle Einstellen der einen oder mehreren Geschmacksparameter (x₁-xₙ) an einem Eingabefenster (11-14) der Eingabeeinheit (1) erfolgt.

6. Verfahren nach einem der vorhergehenden Ansprüche, **dadurch gekennzeichnet, dass** das manuelle Einstellen der einen oder mehreren Geschmacksparameter (x₁-xₙ) mittels einer Skalierung (15, 21) im Eingabefenster (11-14) erfolgt.

7. Verfahren nach einem der vorhergehenden Ansprüche, **dadurch gekennzeichnet, dass** eine Speicherung der eingegebenen einen oder mehreren Geschmacksparameter in einer Datenbank erfolgt.

## Claims

1. Method of configuring a coffee machine comprising at least one or several subassemblies, comprising the following steps:
- input of one or more taste parameters (x₁-_{Xn}) of a coffee beverage at an input unit (1), wherein the one or more selectable taste parameters (x₁-xₙ) relate to at least one or several of the following parameters: acidity, bitterness, saltiness, richness and/or after-taste of the coffee beverage;
- evaluation of the input by a control unit (2) on the basis of comparison of the input taste parameters with at least one pre-stored data set, which comprises at least one activation parameter for activation of the subassemblies (3.1-3.m) of the coffee machine in dependence on the input taste parameters; and
- activation of the at least one or several subassemblies (3.1-3.m) of the coffee machine by the control unit with the activation parameter determined in the evaluation;
**characterised in that**
- the activation parameters comprise at least the pressing pressure of the coffee grinds as well as one or more of the following further parameters: the degree of grinding of the coffee grinds, the brewing temperature, the quantity of the drained weight of coffee grinds, the amount and duration of water feed via a bypass, and scope and duration of a pre-infusion.

2. Method according to claim 1, **characterised by** the following further step: manual selection of a coffee beverage at an input unit (1) of the coffee machine before manual selection of one or more taste parameters.

3. Method according to claim 1 or 2, **characterised in that** the one or more selectable taste parameters ((x₁-Xₙ) comprise at least one or several of the following parameters: acidity, bitterness, saltiness, richness and/or after-taste of the coffee beverage.

4. Method according to claim 1, 2 or 3, **characterised in that** the coffee beverage comprises one or more of the following types of coffee beverage: cappuccino, espresso, latte, macchiato, coffee, mocha and/or others.

5. Method according to any one of the preceding claims, **characterised in that** the manual setting of the one or more taste parameters (x₁-xₙ) is carried out at an input window (11-14) of the input unit (1).

6. Method according to any one of the preceding claims, **characterised in that** the manual setting of the one or more taste parameters (x₁-xₙ) is carried out in the input window (11-14) by means of a scale (15, 21).

7. Method according to any one of the preceding claims, **characterised in that** storage of the input one or more taste parameters is carried out in a databank.

## Revendications

1. Procédé de conformation de machines à café totalement automatiques comportant au moins un ou plusieurs ensembles comprenant les étapes consistant à :
- rentrer au moins un paramètre de goût (x₁-xₙ) d'une boisson à base de café dans une unité d'entrée (1), ce ou ces paramètre(s) de goût (x₁-xₙ) pouvant être sélectionné(s) concernant un ou plusieurs des paramètres suivants : acidité, amertume, salinité, volume et/ou débit de la boisson à base de café, et
- exploiter l'entrée au moyen d'une unité de commande (2) sur le fondement d'une comparaison des paramètres de goût rentrés avec au moins un jeu de données préenregistrées qui comporte au moins un paramètre de commande pour permettre de commander les ensembles (3.1-3.m) de la machine à café totalement automatique en fonction des paramètres de goût rentrés,
- commander le ou les ensemble(s) (3.1-3.m) de la machine à café totalement automatique au moyen de l'unité de commande avec le paramètre de commande déterminé lors de l'exploitation,
**caractérisé en ce que**
les paramètres de commande comprennent au moins la pression de compression du café moulu ainsi qu'un ou plusieurs des paramètres suivants : finesse de moulure du café moulu, température de filtration, quantité dosée de café moulu, quantité et durée de l'alimentation en eau par une conduite de dérivation, importance et durée d'une pré-infusion.

2. Procédé conforme à la revendication 1,
**caractérisé par**
les autres étapes suivantes : sélection manuelle d'une boisson à base de café sur une unité d'entrée (1) de la machine à café totalement automatique avant la sélection manuelle d'un ou de plusieurs paramètre(s) de goût.

3. Procédé conforme à la revendication 1 ou 2,
**caractérisé en ce que**
le ou les paramètre(s) de goût (x₁-xₙ) pouvant être sélectionnés comprennent au moins un ou plusieurs des paramètres suivants : acidité, amertume, salinité, volume et/ ou débit de la boisson à base de café.

4. Procédé conforme à la revendication 1, 2 ou 3,
**caractérisé en ce que**
la boisson à base de café comprend un ou plusieurs des types de café suivants : cappuccino, expresso, latte macchiato, café, moka et/ou autres.

5. Procédé conforme à l'une des revendications précédentes,
**caractérisé en ce que**
le réglage manuel du ou des paramètre(s) de goût (x₁-xₙ) est effectué sur une fenêtre d'entrée (11-14) de l'unité d'entrée (1).

6. Procédé conforme à l'une des revendications précédentes,
**caractérisé en ce que**
le réglage manuel du ou des paramètre(s) de goût (x₁-xₙ) est effectué au moyen d'une échelle (15-21) située dans la fenêtre d'entrée (11-14).

7. Procédé conforme à l'une des revendications précédentes,
**caractérisé en ce qu'**
un enregistrement du ou des paramètre(s) de goût entré(s) dans une banque de données est effectué.
